# EUROPÄISCHE PATENTSCHRIFT

(11) **EP 1 106 489 B1**
(45) Veröffentlichungstag und Bekanntmachung des Hinweises auf die Patenterteilung: **14.04.2004**
(21) Anmeldenummer: 00124582.8
(22) Anmeldetag: 10.11.2000
(51) Int. Cl.: B62D 25/06, B62D 65/00, B60R 13/02

(54) **Sonnenblendenanordnung an einem Kraftfahrzeug-Dachmodul**
A sun visor arrangement at a roof module for motor vehicles
Paresoleil pour module de toiture de véhicules

(30) Priorität: 11.12.1999 DE 19959812
(43) Veröffentlichungstag der Anmeldung: 13.06.2001
(73) Patentinhaber: ArvinMeritor GmbH, 63128 Dietzenbach (DE)
(72) Erfinder: Grimm, Rainer, Dipl.-Ing., 60599 Frankfurt (DE); Böhm, Horst, Dipl.-Ing., 60599 Frankfurt (DE)
(74) Vertreter: Oppermann, Mark, Dipl.-Ing.

(56) Entgegenhaltungen:
- EP-A- 0 348 277
- DE-A- 4 440 612
- DE-A- 19 709 016
- FR-A- 2 487 266
- US-A- 4 634 196
- US-A- 4 902 068

## Beschreibung

Die Erfindung bezieht sich auf eine Sonnenblendenanordnung an einem Dachmodul für Kraftfahrzeuge, entsprechend dem Oberbegriff des Patentanspruchs 1.

Derartige modulartig einbaufertig vorgefertigte Fahrzeugdächer werden getrennt von der Fahrzeugkarosserie fertiggestellt und erst am Montageband in der Automobilfabrik mit der Fahrzeugkarosserie vereinigt. Insbesondere wegen der erheblichen Verkürzung der Montagezeit am Montageband erfreuen sich solche Fahrzeugdachmodule zunehmender Bedeutung.

Besonders vorteilhaft sind dabei solche Dachmodule, bei denen schon Funktionselemente an der Innenschale des Dachmoduls vormontiert sind. Bei einem bekannten Fahrzeugdach (DE 197 09 016 A1) der im Oberbegriff des Anspruchs 1 angegebenen Ausbildung ist die nach unten umbiegbare untere Schicht der Innenschale an den dafür geeigneten Orten mit vormontierten Funktionselementen, beispielsweise Sonnenblenden, versehen. Hierbei sind die Lagerelemente für die Sonnenblenden als Schwenklagerböcke ausgebildet, die in entsprechende Ausnehmungen in der unteren Schicht und ggf. dem Himmelbezugsmaterial eingerastet sind, wodurch eine Vormontage der Sonnenblenden an der Innenschale ermöglicht wird. Nach dem Verkleiden des Karosserierahmens werden durch die Schwenklagerböcke hindurch Befestigungsschrauben in den vorderen Querholm des Karosserierahmens eingeschraubt, wodurch die Sonnenblenden und in deren Bereich auch die untere Schicht der Innenschale am Karosserierahmen befestigt werden.

Der Erfindung liegt die Aufgabe zugrunde, die Vormontagemöglichkeiten für die Sonnenblenden an der Innenschale noch weiter zu verbessern und dabei zusätzlich zur Schwenkbewegbarkeit der Sonnenblenden auch noch eine Drehbarkeit an jeweils einem Lagerelement vorzusehen.

Diese Aufgabe wird erfindungsgemäß durch die Merkmale des Anspruchs 1 gelöst. Vorteilhafte Weiterbildungen gehen aus den Unteransprüchen hervor und sind nachfolgend ebenfalls näher beschrieben.

Durch das Einschäumen eines Drehlagers für jede Sonnenblende bei dem die Innenschale erzeugenden Schäumvorgang wird diese Lagerstelle schon beim Schäumvorgang gebildet, wodurch die Vormontage der Sonnenblenden vereinfacht und gleichzeitig ein Drehbewegungsfreiheitsgrad für die Sonnenblenden erzielt wird. Durch Einführung des Lagerbolzens, an welchem die Sonnenblende schwenkbar gelagert ist, in das Drehlager erfolgt im wesentlichen die Vormontage an der Innenschale.

Für die Herstellung des Drehlagers werden zwei Alternativen vorgeschlagen. Nach Anspruch 2 wird eine in die Schäumform einzulegende Lagerbuchse eingeschäumt, die eine Lagerbohrung für die Aufnahme des Lagerbolzens besitzt. Anspruch 3 sieht die Anbringung einer Lagerbohrung unmittelbar im Schaumkunststoff durch Umschäumen eines dem Lagerbolzen entsprechenden Formdorns vor. Bei dem hierbei zur Anwendung gelangenden Schäumverfahren wird der Formdorn mit einem in der Innenschale partiell gebildeten Schaum größerer Härte umschäumt, so daß bei der Entformung und dem Herausziehen des Formdorns die Lagerbohrung für den Lagerbolzen ohne Nacharbeitungserfordernis fertig ist. Schäumverfahren, bei denen bei einstückig geschäumten Werkstücken unterschiedliche Schäume gebildet werden können, sind an sich bekannt.

Eine besonders einfache Befestigung der an der Innenschale vormontierten Sonnenblenden an dem vorderen Querholm des Karosserierahmens geht aus Anspruch 4 hervor. Durch entsprechende Anpassung der Befestigungsöffnungen im Querholm an den Lagerbolzen bei entsprechender Ausbildung desselben wird eine einfache Verrastung dieser Teile ermöglicht. Diese Verrastung wird durch die im Anspruch 5 angegebenen Ausbildungsmerkmale für den Lagerbolzen erleichtert, weil durch die hohle Ausführung des Lagerbolzens und die Anbringung von Schlitzen die elastische Verformbarkeit des betreffenden Lagerbolzenendes beim Verrastungsvorgang verbessert wird. Die hohle Ausbildung des Lagerbolzens ermöglicht aber auch entsprechend Anspruch 6 eine Sicherung der Verrastungsbefestigung durch Einführung eines Sperrstifts oder einer Sperrschraube in den hohlen Lagerbolzen, wodurch die elastische Verformbarkeit des Lagerbolzenendes praktisch aufgehoben wird. Sperrstift oder Sperrschraube werden durch die im Anspruch 7 angegebenen Maßnahmen in definierter Lage in dem Lagerbolzen angebracht, indem die Stufe der Stufenbohrung im Lagerbolzen als Anschlag für einen Kopf des Sperrstifts oder der Sperrschraube dient.

Der Lagerbolzen des Drehlagers erlaubt auf die im Anspruch 8 angegebene vorteilhafte Weise und von außen nicht sichtbar den elektrischen Anschluß von an der Sonnenblende angebrachten beleuchteten Kosmetikspiegeln.

Ist bei Sonnenblenden die äußere der beiden Lagerstellen als Drehlager ausgebildet, ist die innere Lagerstelle ein aushängbares Schwenklager, wodurch die Sonnenblende nach dem Aushängen mittels des Drehlagers in Richtung der Seitenscheibe verschwenkt werden kann. Die Sonnenblendenanordnung gemäß der vorliegenden Erfindung umfaßt auch das im Anspruch 9 angegebene Schwenklager, das aus dem Werkstoff der Innenschale selbst und damit einteilig schäumgeformt ist und auf die im Anspruch 10 angegebene Weise noch verstärkt sein kann.

Weitere Einzelheiten der Erfindung werden nachfolgend anhand der ein Ausführungsbeispiel darstellenden Zeichnungen näher erläutert. Darin zeigt:
- Fig. 1: in perspektivischer schematischer Darstellungsweise die abgebrochene Innenansicht einer Sonnenblendenanordnung,
- Fig. 2: den abgebrochenen Schnitt durch das Drehlager entsprechend der Schnittverlaufslinie II-II in Fig. 1 und
- Fig. 3: den abgebrochenen Schnitt durch das aushängbare Schwenklager entsprechend der Schnittverlaufslinie III-III in Fig. 1.

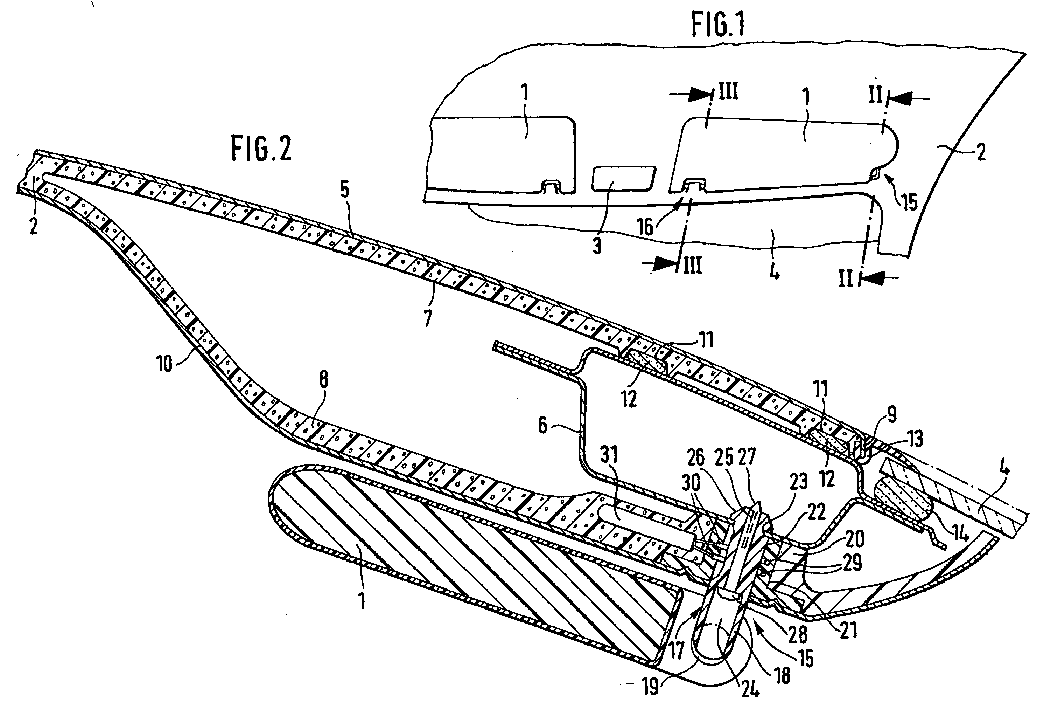

Die aus Fig. 1 entnehmbare Sonnenblendenanordnung umfaßt zwei Sonnenblenden 1, die auf noch zu beschreibende Weise schwenkbar und drehbar an der Innenschale 2 des Dachmoduls zu beiden Seiten einer Innenraumleuchte 3 oberhalb der Windschutzscheibe 4 angebracht sind.

Bei dem gezeigten Ausführungsbeispiel ist die Innenschale 2 des Dachmoduls aus einem Schaumkunststoff gebildet, der auf eine starre Dachhaut 5 aufgeschäumt ist. Die starre Dachhaut 5 besteht aus einem tiefgezogenen Metallblech, beispielsweise Aluminiumblech, oder kann aus einer vakuumverformten Kunststoffolie gebildet sein. Die Erfindung ist aber auch bei Dachmodulausführungsformen anwendbar, bei denen keine feste Dachhaut vorgesehen ist. Hierbei besteht das Dachmodul im wesentlichen aus einem harten schalenförmig und eigensteif geformten Schaumkunststoff mit glatter lackierbarer Außenfläche.

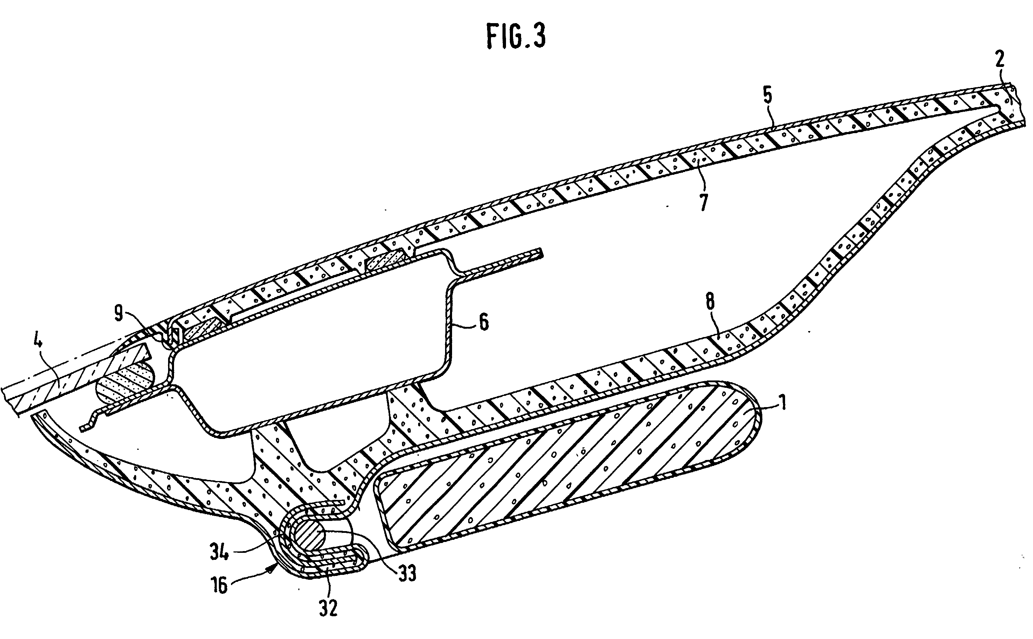

Die Innenschale 2 ist im Bereich der zur Auflage auf den Karosserierahmen 6 vorgesehenen Außenränder in zwei Schichten aufgeteilt, von denen die obere Schicht 7 auf den Karosserierahmen 6 aufgelegt ist, während die untere Schicht 8 über die Außenränder des Fahrzeugdachs übersteht und für den Durchtritt durch die von dem Karosserierahmen 6 begrenzte Karosserieöffnung nach unten ohne bleibende Deformationen umbiegbar ist. Von dem Karosserierahmen 6 ist in den Figuren 2 und 3 nur der vordere Querholm dargestellt. Die untere Schicht 8 dient zur Verkleidung des Karosserierahmens und ist im Bereich des vorderen Querholms des Karosserierahmens 6 mit den vormontierten Sonnenblenden 1 versehen.

Geeignete Werkstoffe für die Innenschale 2 sind Hartschaumkunststoffe auf PUR-Basis, die durch dem Kunststoff vor dem Aufschäumen einverleibte Faserstoffe, beispielsweise Glasfaserabschnitte, armiert sein können. Aber auch in die Schäumform eingelegte Gewebe, Gewirke, Vliese u.dgl. sind als Armierung geeignet. Durch das Aufschäumen der armierten Innenschale 2, deren obere Schicht 7 bis zu einer Randabkantung 9 der Dachhaut 5 reicht, entsteht ein sandwichartiges Verbunddachmodul hoher Formbeständigkeit und Festigkeit. Alle Konturen der Innenschale 2 einschließlich der unteren Schicht 8 und ihrer Profilierungen werden durch entsprechende Formgebung der Schäumform (nicht dargestellt) gebildet.

Die Innenfläche der Innenschale 2 kann zur Ausbildung eines Dachhimmels mit einem textilen oder folienartigen Bezugsmaterial 10 beschichtet sein. Im Bereich der Auflage auf den Karosserierahmen 6 ist die obere Schicht 7 mit umlaufend eingeformten Aufnahmenuten 11 versehen, in welche das Dachmodul gegenüber dem Karosserierahmen 6 abdichtende und daran befestigende Kleberraupen 12 Aufnahme finden. Auf die Randabkantung 9 ist ein Dichtprofil 13 aufgesteckt und mit angeschäumt, das mit einer nach außen vorspringenden Lippe abdichtend der Außenfläche der Windschutzscheibe 4 anliegt. Zwischen der Windschutzscheibe 4 und einem nach außen vorspringenden Flansch des vorderen Querholms des Karosserierahmens 6 übernimmt eine weitere Kleberraupe 14 die Befestigung und Abdichtung der Windschutzscheibe 4 an bzw. gegenüber der Fahrzeugkarosserie.

Jede der beiden Sonnenblenden 1 ist über jeweils zwei Lagerelemente schwenkbar mit der unteren Schicht 8 der Innenschale 2 verbunden. Das jeweils äußere Lagerelement 15 ist ein Schwenk- und Drehlager, während das jeweils innere Lagerelement 16 ein aushängbares Schwenklager ist. Zunächst wird das äußere Lagerelement 15 anhand des Ausführungsbeispiels gemäß Fig. 2 näher erläutert.

Hierbei ist ein zweischenkliger Lagerbolzen 17 vorgesehen, dessen beide Schenkel in einem stumpfen Winkel zueinander ausgerichtet sind und von denen der etwa senkrecht zu der unteren Fläche des vorderen Querholms des Karosserierahmens 6 ausgerichtete Schenkel 18 der Drehlagerfunktion zugeordnet ist, während der etwa parallel zum vorderen Querholm ausgerichtete andere Schenkel 19 in die Sonnenblende 1 eingreift, die an diesem Schenkel 19 schwenkbar gelagert ist. Im gezeigten Beispiel ist das Drehlager für den Schenkel 18 des Lagerbolzens 17 eine in eine Verdickung 20 der unteren Schicht 8 eingeschäumte Lagerbuchse 21, deren Lagerbohrung 22 den Schenkel 18 des Lagerbolzens 17 drehbar aufnimmt.

Der Lagerbolzen 17 ermöglicht nicht nur eine Vormontage der Sonnenblende 1 an der Innenschale 2, wozu auf noch zu beschreibende Weise das Lagerelement 16 beiträgt, sondern ermöglicht auch die Befestigung der Sonnenblende 1 unter Zwischenlage der unteren Schicht 8 am vorderen Querholm des Karosserierahmens 6. Zu diesem Zweck weist der Lagerbolzen 17 an seinem der Sonnenblende 1 abgelegenen Ende eine Umfangsnut 23 für die Verrastung mit dem Rand einer entsprechenden Aufnahmeöffnung in dem vorderen Querholm des Karosserierahmens 6 auf. Dabei ist der Durchmesser der Aufnahmeöffnung kleiner als der Durchmesser des Lagerbolzens 17 bzw. seines Schenkels 18. Der Lagerbolzen 17 ist im Bereich seines Schenkels 18 mit einer beidseitig offenen Axialbohrung 24 versehen und besitzt an seinem der Sonnenblende 1 abgelegenen Ende bis auf die Axialbohrung 24 durchgehende Schlitze 25 sowie an diesem Ende auch eine umlaufende konische Abphasung 26 als Einführhilfe bei der Verrastung des Lagerbolzens 17 in der Aufnahmeöffnung des Querholms des Karosserierahmens 6. Der kleinste Durchmesser der konischen Abphasung ist für diesen Zweck geringer als der Durchmesser der Aufnahmebohrung.

In die Axialbohrung 24 ist von dem der Sonnenblende 1 zugekehrten Ende des Lagerbolzens 17 her ein mindestens bis in den mit Schlitzen 25 versehenen Bereich des Schenkels 18 des Lagerbolzens 17 reichender Sperrstift 27 einführbar. Die Schlitze 25 in Verbindung mit der konischen Abphasung 26 sorgen für eine federnd elastische Deformierbarkeit beim Verrasten des Lagerbolzens 17 in der Aufnahmeöffnung des Karosserierahmens. Der Sperrstift 27 verhindert nach seiner Anbringung eine elastische Deformation des Lagerbolzens 17 im Bereich der Aufnahmeöffnung und sichert damit die Verrastung des Lagerbolzens 17 am vorderen Querholm des Karosserierahmens 6.

Die Axialbohrung 24 ist als Stufenbohrung ausgebildet, wobei der der Sonnenblende 1 benachbarte Bereich größeren Durchmessers der Stufenbohrung für die Aufnahme eines Kopfes 28 des Sperrstifts 27 angepaßt ist, der bei vollständiger Einführung in die Axialbohrung 24 der Bohrungsstufe anliegt.

Für den elektrischen Anschluß eines beleuchteten Kosmetikspiegels (nicht dargestellt) der Sonnenblende 1 können am Umfang des Schenkels 18 des Lagerbolzens 17 elektrisch leitende Schleifringe 29 fest angebracht sein. Die Schleifringe 29 sind mit elektrischen Leitern (nicht dargestellt) verbunden, an welche die Beleuchtungseinrichtung eines an der Sonnenblende 1 befindlichen Kosmetikspiegels angeschlossen ist. Nach Anbringung des Lagerbolzens 17 stehen die Schleifringe 29 in dem Drehlager 15 mit Schleifkontakten 30 ständig in Berührung, die bis in die Lagerbohrung 22 des Drehlagers 15 reichen und deren elektrische Zuleitungen 31 in die Verdickung 20 der Innenschale 2 eingeschäumt sind.

Zur Erläuterung des inneren Lagerelements 16 wird nunmehr auf Fig. 3 Bezug genommen. Das als lösbares Schwenklager ausgebildete Lagerelement 16 besitzt einen etwa C-förmig profilierten Lagervorsprung 32. Der Lagervorsprung 32 ist beim Schäumvorgang der Innenschale 2 und damit einteilig gebildet. Ein Schwenklagerzapfen 33 der Sonnenblende 1 greift quer zur Schwenkachse lösbar mit dem Lagervorsprung 32 ein. Der Lagervorsprung 32 kann beim Schäumvorgang zunächst als etwa gerade nach unten vorstehendes und damit entformbares Element gebildet werden, dessen C-Form anschließend durch Umbiegen um einen Werkzeugdorn hergestellt wird. Der Werkzeugdorn besitzt etwa den Durchmesser des Schwenklagerzapfens 33. Das Umbiegen des Lagervorsprungs in seine gezeichnete Form erfolgt im thermoplastischen Zustand seines geschäumten Materials. In den C-förmig profilierten Lagervorsprung 32 kann eine Verstärkung 34 aus Metall eingebettet sein, die ebenfalls bei dem beschriebenen Umbiegungsvorgang ihre gezeichnete Form erhält. Die Umbiegung des Lagervorsprungs 32 wird so vorgenommen, daß die Öffnungsweite des C-Profils geringer ist als der Durchmesser des Schwenklagerzapfens 33, wodurch letzterer an dem Lagervorsprung 32 lösbar verrastet.

Es wird eine Sonnenblendenanordnung vorgeschlagen, deren Lagerlemente, bestehend aus einem Schwenk-/Drehlager und einem lösbaren Schwenklager, an einer aus Schaumkunststoff geformten Innenschale eines Kraftfahrzeug-Dachmoduls mit ihren dachseitigen Bestandteilen beim Schäumformen der Innenschale mit ein- bzw. angeschäumt werden, so daß die Sonnenblenden an der Innenschale des Dachmoduls vormontierbar sind, wobei das Schwenk-/Drehlager zur Befestigung der Sonnenblenden und der Innenschale an einem Karosserierahmen ausgebildet ist.

## Patentansprüche

1. Sonnenblendenanordnung an einem Dachmodul für Kraftfahrzeuge, das sandwichartig und an seiner aus Schaumkunststoff geformten Innenschale (2) als Dachhimmel ausgebildet, getrennt von der Fahrzeugkarosserie hergestellt, mit seinen Außenrändern auf einen Karosserierahmen (6) auflegbar und mit diesem fest verbindbar ist, wobei die Innenschale (2) im Bereich ihrer zur Auflage auf den Karosserierahmen (6) vorgesehenen Außenränder in zwei Schichten (7, 8) aufgeteilt ist, von denen die obere Schicht (7) auf den Karosserierahmen (6) auflegbar ist, während die untere Schicht (8) nach unten umbiegbar und zur Verkleidung des Karosserierahmens (6) ausgebildet ist, wobei weiterhin die untere Schicht (8) im Bereich des vorderen Querholms des Karosserierahmens (6) mit vormontierten Sonnenblenden (1) versehen ist, welche schwenkbar an Lagerelementen angebracht sind, die mit der unteren Schicht (8) verbunden sind, wobei durch die Lagerelemente Befestigungsmittel hindurchführbar sind, welche die Lagerelemente und die untere Schicht (8) am vorderen Querholm des Karosserierahmens (6) befestigen, **dadurch gekennzeichnet, daß** für jede Sonnenblende (1) ein Drehlager als Lagerelement in die untere Schicht (8) der Innenschale (2) eingeschäumt ist, welches zur Aufnahme eines Lagerbolzens (17) ausgebildet ist, mit welchem die Sonnenblende (1) außerhalb des Drehlagers schwenkbar verbunden ist.

2. Sonnenblendenanordnung nach Anspruch 1, **dadurch gekennzeichnet, daß** das Drehlager durch eine eingeschäumte Lagerbuchse (21) gebildet ist, die eine Lagerbohrung (22) für die Aufnahme des Lagerbolzens (17) besitzt.

3. Sonnenblendenanordnung nach Anspruch 1, **dadurch gekennzeichnet, daß** das Drehlager durch Umschäumen eines dem Lagerbolzen (17) entsprechenden Formdorns mit einem Hartschaum gebildet ist.

4. Sonnenblendenanordnung nach einem der Ansprüche 1 bis 3, **dadurch gekennzeichnet, daß** der Lagerbolzen (17) an seinem der Sonnenblende (1) abgelegenen Ende eine Umfangsnut (23) für die Verrastung mit dem Rand einer Aufnahmeöffnung in dem vorderen Querholm des Karosserierahmens (6) aufweist, deren Öffnungsdurchmesser kleiner als der Lagerbolzendurchmesser ist.

5. Sonnenblendenanordnung nach Anspruch 4, **dadurch gekennzeichnet, daß** der Lagerbolzen (17) mit einer beidseitig offenen Axialbohrung (24), an seinem der Sonnenblende (1) abgelegenen Ende mit bis auf die Axialbohrung (24) durchgehenden Schlitzen (25) und an diesem Ende mit einer umlaufenden konischen Abphasung (26) versehen ist, deren kleinster Durchmesser geringer ist als der Durchmesser der Aufnahmeöffnung.

6. Sonnenblendenanordnung nach Anspruch 5, **dadurch gekennzeichnet, daß** in die Axialbohrung (24) von dem der Sonnenblende (1) zugekehrten Ende des Lagerbolzens (17) her ein mindestens bis in den mit Schlitzen (25) versehenen Bereich des Lagerbolzens (17) reichender Sperrstift (27) od.dgl. einführbar ist.

7. Sonnenblendenanordnung nach den Ansprüchen 5 und 6, **dadurch gekennzeichnet, daß** die Axialbohrung (24) als Stufenbohrung ausgebildet ist, wobei der der Sonnenblende (1) benachbarte Bereich größeren Durchmessers der Stufenbohrung für die Aufnahme eines Kopfes (28) des Sperrstifts (27) od.dgl. angepaßt ist, der bei vollständiger Einführung in die Axialbohrung (24) der Bohrungsstufe anliegt.

8. Sonnenblendenanordnung nach einem der Ansprüche 1 bis 7, **dadurch gekennzeichnet, daß** am Umfang des Lagerbolzens (17) elektrisch leitende Schleifringe (29) fest angebracht sind, die mit elektrischen Leitern verbunden sind, an welche die Beleuchtungseinrichtung eines an der Sonnenblende (1) befindlichen Kosmetikspiegels angeschlossen ist, wobei die Schleifringe (29) nach Anbringung des Lagerbolzens (17) in dem Drehlager mit Schleifkontakten (30) in Berührung stehen, die bis in die Lagerbohrung (22) des Drehlagers reichen und deren elektrische Zuleitungen (31) in die Innenschale (2) eingeschäumt sind.

9. Sonnenblendenanordnung nach einem der Ansprüche 1 bis 8, **dadurch gekennzeichnet, daß** an der dem Lagerbolzen (17) des Drehlagers abgelegenen Seite der Sonnenblende (1) ein lösbares Schwenklager durch einen etwa C-förmig profilierten, beim Schäumvorgang der Innenschale (2) und damit einteilig gebildeten Lagervorsprung (32) vorgesehen ist, in welchen ein Schwenklagerzapfen (33) der Sonnenblende (1) quer zur Schwenkachse lösbar eingreift.

10. Sonnenblendenanordnung nach Anspruch 9, **dadurch gekennzeichnet, daß** in den C-förmig profilierten Lagervorsprung (32) eine Verstärkung (34) eingebettet ist.

## Claims

1. Sun visor arrangement at a roof module for motor vehicles, which module, produced separately from the vehicle body in sandwich fashion and constructed at its inner shell (2), which is formed from a foamed plastics material, as an inner roof lining, can be laid by way of its outer edges on a body frame (6) and firmly connected thereto, wherein the inner shell (2) is divided in the region of its outer edges provided to lie on the body frame (6) into two layers (7, 8), the top layer (7) of which can be laid on the body frame (6), while the bottom layer (8) can be bent downwards and is constructed to cover the body frame (6), wherein the bottom layer (8) is provided in the region of the front cross member of the body frame (6) with preassembled sun visors (1), which are fitted so as to swivel on bearing elements which are connected to the bottom layer (8), and wherein fastening means can be passed through the bearing elements, which fastening means fasten the bearing elements and the bottom layer (8) to the front cross member of the body frame (6), **characterized in that** a rotary bearing is foamed into the bottom layer (8) of the inner shell (2) as bearing element for each sun visor (1), which bearing is constructed to seat a bearing pin (17), to which the sun visor (1) is connected in a swiveling fashion outside of the rotary bearing.

2. Sun visor arrangement according to Claim 1, **characterized in that** the rotary bearing is formed by a foamed-in bearing bush (21), which has a bearing bore (22) for seating the bearing pin (17).

3. Sun visor arrangement according to Claim 1, **characterized in that** the rotary bearing is formed by foaming around a mould mandrel corresponding to the bearing pin (17) with a rigid foam.

4. Sun visor arrangement according to any one of Claims 1 to 3, **characterized in that** the bearing pin (17) comprises at its end which is remote from the sun visor (1) a circumferential groove (23) for locking with the edge of a seating opening in the front cross member of the body frame (6), the opening diameter of which opening is smaller than the diameter of the bearing pin.

5. Sun visor arrangement according to Claim 4, **characterized in that** the bearing pin (17) is provided with an axial bore (24) which is open on both sides, at its end which is remote from the sun visor (1) with slots (25) continuing as far as the axial bore (24) and, at this end, with a circular conical chamfer (26) whose minimum diameter is smaller than the diameter of the seating opening.

6. Sun visor arrangement according to Claim 5, **characterized in that** a locking pin (27) or similar, which extends at least into the region of the bearing pin (17) which is provided with slots (25), can be inserted in the axial bore (24) from the end of the bearing pin (17) facing the sun visor (1).

7. Sun visor arrangement according to Claims 5 and 6, **characterized in that** the axial bore (24) is in the form of a stepped bore, with the region of the stepped bore adjacent to the sun visor (1), which is of a greater diameter, being adapted to seat a head (28) of the locking pin (27) or similar, which rests against the bore step when completely inserted in the axial bore (24).

8. Sun visor arrangement according to any one of Claims 1 to 7, **characterized in that** electrically conductive slip rings (29) are firmly fitted at the circumference of the bearing pin (17) and are connected to electrical conductors, to which the lighting device of a vanity mirror located on the sun visor (1) is connected, wherein after the bearing pin (17) has been fitted in the rotary bearing, the slip rings (29) are in contact with sliding contacts (30), which extend into the bearing bore (22) of the rotary bearing and the electrical leads (31) of which are foamed into the inner shell (2).

9. Sun visor arrangement according to any one of Claims 1 to 8, **characterized in that** a removable swivel bearing is provided on the side of the sun visor (1) remote from the bearing pin (17) of the rotary bearing by a bearing projection (32) profiled approximately in the shape of a C, produced during foaming of the inner shell (2) and in one part therewith, in which bearing projection a swivel bearing pin (33) of the sun visor (1) engages in a releasable manner transversely to the swivel axis.

10. Sun visor arrangement according to Claim 9, **characterized in that** a reinforcement (34) is embedded in the bearing projection (32) of C-shaped profile.

## Revendications

1. Agencement de pare-soleil sur un module de toit pour véhicules automobiles, qui est réalisé en sandwich et sous forme de ciel de toit au niveau de sa coque intérieure (2) façonnée en mousse de. matière plastique, fabriqué séparément de la carrosserie du véhicule, qui peut être posé avec ses bords extérieurs sur un cadre (6) de carrosserie et qui peut être relié de manière solidaire à celui-ci, la coque intérieure (2) étant subdivisée, dans la région de ses bords extérieurs prévus pour être posés sur le cadre (6) de carrosserie, en deux couches (7, 8) dont la couche supérieure (7) peut être posée sur le cadre de carrosserie (6) tandis que la couche inférieure (8) peut être recourbée vers le bas et est réalisée pour revêtir le cadre (6) de carrosserie, la couche inférieure (8) étant en outre pourvue, dans la région de la traverse antérieure du cadre (6) de carrosserie, de pare-soleil prémontés qui sont montés à pivotement dans des éléments de montage qui sont reliés à la couche inférieure (8), et à travers les éléments de montage, on peut faire passer des moyens de fixation qui fixent les éléments de montage et la couche inférieure (8) à la traverse antérieure du cadre (6) de carrosserie, **caractérisé en ce que** pour chaque pare-soleil (1) un palier rotatif est injecté sous forme de mousse dans la couche inférieure (6) de la coque intérieure et servant d'élément de montage qui est réalisé pour recevoir un goujon de montage (17) par lequel le pare-soleil est relié de manière pivotante en dehors du palier rotatif.

2. Agencement de pare-soleil selon la revendication 1, **caractérisé en ce que** le palier rotatif est formé par un coussinet (21) en mousse injectée qui possède un alésage de palier (22) pour la réception du goujon de montage (17).

3. Agencement de pare-soleil selon la revendication 1, **caractérisé en ce que** le palier rotatif est formé par entourage de mousse avec une mousse dure autour d'un mandrin de façonnage correspondant au goujon de montage (17).

4. Agencement de pare-soleil selon l'une des revendications 1 à 3, **caractérisé en ce que** le goujon de montage (17) présente à son extrémité éloignée du pare-soleil (1) une gorge périphérique (23) pour l'enclenchement avec le bord d'une ouverture de réception dans la traverse antérieure du cadre (6) de carrosserie, dont le diamètre d'ouverture est inférieur au diamètre du goujon de montage.

5. Agencement de pare-soleil selon la revendication 4, **caractérisé en ce que** le goujon de montage (17) est pourvu d'un perçage axial (24) ouvert des deux côtés, de fentes (25) continues, à l'exception du perçage axial (24), à son extrémité éloignée du pare-soleil (1), et à cette extrémité, d'un chanfrein (26) périphérique conique dont le diamètre le plus petit est inférieur au diamètre de l'ouverture de réception.

6. Agencement de pare-soleil selon la revendication 5, **caractérisé en ce qu'**on peut introduire dans le perçage axial (24) depuis l'extrémité du goujon de montage (17), qui est tournée vers le pare-soleil (1), une goupille de blocage (27) ou similaire allant au moins jusque dans la zone du goujon de montage (17) qui est pourvue de fentes (25).

7. Agencement de pare-soleil selon les revendications 5 et 6, **caractérisé en ce que** le perçage axial (24) est réalisé sous forme de perçage étagé, la région de plus grand diamètre du perçage étagé, qui est voisine du pare-soleil (1) est adaptée pour recevoir une tête (28) de la goupille de blocage (27) ou similaire, laquelle est en appui lors de l'introduction complète dans le perçage axial (24) de l'étage du perçage.

8. Agencement de pare-soleil selon l'une des revendications 1 à 7, **caractérisé en ce que** sur la périphérie du goujon de montage (17), des bagues collectrices (29) électroconductrices sont montées de manière solidaire et sont reliées à des conducteurs électriques auxquels est branché le système d'éclairage d'un miroir cosmétique se trouvant sur le pare-soleil (1), les bagues collectrices (29) étant en contact avec des contacts frottants après avoir monté le goujon de montage (17) dans le palier rotatif, lesdits contacts allant jusque dans l'alésage de palier (22) et leurs lignes d'amenée électriques (31) étant noyées dans de la mousse dans la coque intérieure (2).

9. Agencement de pare-soleil selon l'une des revendications 1 à 8, **caractérisé en ce que** sur le côté du pare-soleil (1), qui est détourné du palier rotatif, est prévu un palier pivotant détachable à travers une saillie de palier (32) à profil approximativement en forme de C et formé d'un seul tenant lors de l'opération d'injection de mousse dans la coque intérieure (2), saillie dans laquelle un tourillon pivotant (33) du pare-soleil (1) s'engage de manière détachable transversalement à l'axe de pivotement.

10. Agencement de pare-soleil selon la revendication 9, **caractérisé en ce qu'**un renforcement (34) est noyé dans la saillie de palier (32) à profil en forme de C.
